# EUROPÄISCHE PATENTSCHRIFT

(11) **EP 1 174 021 B1**
(45) Veröffentlichungstag und Bekanntmachung des Hinweises auf die Patenterteilung: **16.03.2005**
(21) Anmeldenummer: 01117254.1
(22) Anmeldetag: 17.07.2001
(51) Int. Cl.: A01F 29/22

(54) **Schleifvorrichtung**
Sharpening device
Dispositif d'affûtage

(30) Priorität: 22.07.2000 DE 10035742
(43) Veröffentlichungstag der Anmeldung: 23.01.2002
(73) Patentinhaber: DEERE & COMPANY, Moline, Illinois 61265-8098 (US)
(72) Erfinder: Wolf, Helmut, 66482 Zweibrücken (DE); Nieschulze, Henrik, 29568 Wieren (DE)
(74) Vertreter: Holst, Sönke, Dr.

(56) Entgegenhaltungen:
- EP-A- 0 335 332
- EP-A- 0 734 647
- DE-C- 19 903 153
- FR-A- 2 676 612

## Beschreibung

Die Erfindung betrifft eine Schleifvorrichtung für eine Häckseleinrichtung, mit einem Schleifstein zum Schleifen der Messer der Häckseleinrichtung und einer Bewegungseinrichtung zum Bewegen des Schleifsteins über eine Länge der Messer, wobei einzelnen Stellen der Messer unterschiedliche Schleifzeiten zugeordnet sind.

In der US 4 843 767 A wird eine Schleifeinrichtung für eine Häckseleinrichtung beschrieben, bei der ein Schleifstein mit konstanter Geschwindigkeit über die Breite der Häckseltrommel hin und her verfahren wird. An den Umkehrpunkten am linken und rechten Ende der Häckseltrommel bleibt der Schleifstein jeweils für eine Verweilzeit stehen, so dass dort die Messer der Häckseltrommel über eine Zeitdauer geschliffen werden, die länger als die Schleifzeit ist, die den zwischen den Umkehrpunkten liegenden Teilen der Messer zugeordnet ist.

Die FR 2 676 612 A beschreibt eine Schleifeinrichtung für eine Häckseltrommel eines Feldhäckslers, deren Schleifstein durch einen elektromechanischen Antrieb über die Breite der Häckseltrommel bewegt wird. Der elektromechanische Antrieb wird über eine elektronische Steuerung kontrolliert, die eine Änderung der Geschwindigkeit des elektromechanischen Antriebs ermöglicht. Die Verweilzeiten des Schleifsteins werden nicht näher beschrieben.

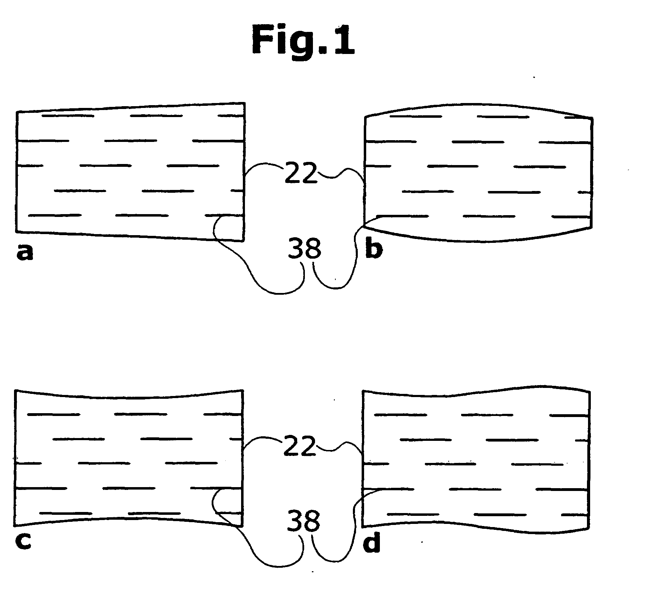

Beim Betrieb eines Feldhäckslers nutzen sich die an der Häckseltrommel befestigten Messer mit der Zeit ab. Während sich die Messer über den Umfang der Häckseltrommel in der Regel näherungsweise gleichmäßig abnutzen, kann die Abnutzung über die Breite der Häckseltrommel sehr unterschiedlich sein. Somit kann der Durchmesser des von den Schneidkanten der Messer beschriebenen Hüllkreises in axialer Richtung der Welle der Häckseltrommel variieren. Zur Illustration wird auf die Figur 1 verwiesen, in der dargestellt ist, dass statt einer angestrebten zylindrischen oder geringfügig konkaven Form der Schneidkanten der Messer 38 der Häckseltrommel 22 die dargestellten konischen (a), konvexen (b), konkaven (c) oder unregelmäßigen Formen (d) entstehen können. Eine zylindrische oder leicht konkave Form wird angestrebt, um ein automatisches Einstellen der Gegenschneide zu vereinfachen oder je nach Einstellsystem erst möglich zu machen. Eine parallele und exakte Zustellung der Gegenschneide zum Umfang der Häckseltrommel ist für einen effektiven Häckselprozess unabdingbar.

Bei bekannten Schleifvorrichtungen sind keine Möglichkeiten vorgesehen, die in Figur 1 dargestellten Abweichungen von der zylindrischen Form der Häckseltrommel beim Schleifvorgang selbsttätig auszugleichen.

Das der Erfindung zugrunde liegende Problem wird darin gesehen, eine verbesserte Schleifvorrichtung bereitzustellen.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Es wird vorgeschlagen, die Bewegungseinrichtung des Schleifsteins derart zu steuern, dass die Schleifzeit für jeden Punkt der Länge des Messers unterschiedlich ist. Die Weg-Zeit-Charakteristik der Bewegung des Schleifsteins ist somit beliebig wähl- und steuerbar. Die Bewegungseinrichtung kann derart gesteuert werden, dass der Schleifstein auf die Stellen des Messers, an denen es relativ wenig abgenutzt ist, länger einwirkt, als auf die Stellen, an denen es relativ stark abgenutzt ist.

Auf diese Weise erreicht man eine Verbesserung der Schleifqualität. Durch ein einfaches, weil selbsttätiges (Wieder-) Herstellen der gewünschten Sollform der Schneidkante des Messers ist eine einfachere und genauere Einstellung der Position der Gegenschneide möglich, was die Leistungsaufnahme der Häckseleinrichtung beim Häckselbetrieb vermindert.

Eine Information über die den einzelnen Punkten des Messers zugeordnete Schleifzeit kann im Voraus festgelegt und beispielsweise in einem Speicher abgelegt sein. Die Schleifzeiten können auf empirisch (in Versuchen) oder theoretisch ermittelten Erfahrungswerten beruhen. Als angestrebte und somit der Wahl der Schleifzeiten zugrunde liegende Sollform der Schneidkanten der Messer kommt primär eine zur Welle einer Häckseltrommel parallele Schneidkante, bzw. eine über die Breite der Häckseltrommel betrachtet leicht konkave Form der Schneidkanten in Betracht. Bei Scheibenradhäckslern wird die Sollform in der Regel eine zur Welle orthogonale Schneidkante sein.

Es sind verschiedene Möglichkeiten denkbar, den Schleifstein mit über die Länge des Messers variierender Schleifzeit, d. h. in zeitlich nicht linearer Weise, zu bewegen.

Einerseits kann die Bewegungseinrichtung den Schleifstein stufenweise über das Messer bewegen. Der Schleifstein wird um so länger an einer Stelle stehen gelassen, je mehr Material abzutragen ist. Eine mit der Bewegungseinrichtung gekoppelte Steuerung erhält eine Information, sobald die einer jeweils bearbeiteten Stelle des Messers zugeordnete Schleifzeit erreicht ist. Anschließend wird der Schleifstein weiter bewegt.

Andererseits kann die Bewegungseinrichtung den Schleifstein kontinuierlich über die Breite der Häckseleinrichtung bewegen, wobei die jeweilige Geschwindigkeit von der aktuellen Position des Schleifsteins abhängt. Denkbar ist auch, dass die Bewegungseinrichtung den Schleifstein nicht während des gesamten Schleifvorgangs über die gesamte Breite der Häckseltrommel verfährt, sondern während eines Teils des Schleifvorgangs nur in bestimmten Bereichen bewegt, in denen ein besonders intensives Abschleifen erforderlich ist. Die verbleibenden Bereiche können nicht oder relativ schnell überstrichen werden, um die Schleifzeit zu verkürzen.

Damit die Bewegungseinrichtung den Schleifstein mit jeweils unterschiedlichen Schleifzeiten über die Länge der Messer verfahren kann, ist es zweckmäßig, wenn einer die Bewegungseinrichtung steuernde Steuerung eine Information über die jeweilige Position des Schleifsteins vorliegt. Diese Information kann mittels eines Sensors gewonnen werden, der die Position des Schleifsteins, oder der ihm zugeordneten Bewegungseinrichtung erfasst. Denkbar wäre auch, dass die Steuerung abspeichert, welche Ansteuersignale an die Bewegungseinrichtung gegeben wurden. Diese Information enthält eine Information über die Sollposition des Schleifsteins, die mit der realen Position gleichgesetzt werden kann.

Nach den beschriebenen Schleifvorgängen ist die Sollform - vorzugsweise eine zylindrische oder leicht konkave Form - des Hüllkreises der Schneidkanten der Messer erzielt. Es bietet sich an, dass zum Abschluss des Schleifvorgangs ein abschließendes Schlichten erfolgt, um hinreichend scharfe Messer zu erhalten.

Bei der von der Schleifvorrichtung bearbeiteten Häckseleinrichtung kann es sich um eine Häckseltrommel in offener oder geschlossener Form handeln, an der mehrere Messer angebracht sind. Die Häckseltrommel ist auf einer Welle angeordnet, die beim Schleifen in Rotation versetzt wird und sich in der Regel gegenüber dem normalen Häckselbetrieb in Gegenrichtung dreht. Beim Schleifen kann die Drehgeschwindigkeit der Häckseltrommel, die Verfahrgeschwindigkeit und Zustellung des Schleifsteins in der Weise variiert werden, dass zunächst ein (Grob-) Schleifen zur Wiederherstellung der Sollform der Messer und anschließend ein abschließendes (Fein-) Schleifen erfolgt.

Vorzugsweise wird eine den Schleifstein über die Breite der Häckseleinrichtung transportierende und/oder ihn ihr zustellende Bewegungseinrichtung von einer Steuerung gesteuert und bewegt den Schleifstein so, dass Abweichungen in der Form der Schneidkanten der Messer ausgeglichen werden.

Die vorliegende Erfindung ist an einer Vielzahl von Häckseleinrichtungen mit zu schärfenden Messern verwendbar. Sie kann insbesondere an selbstfahrenden oder gezogenen Erntemaschinen mit Häckseltrommeln oder Scheibenradhäckslern benutzt werden.

In den Zeichnungen sind zwei nachfolgend näher beschriebene Ausführungsbeispiele der Erfindung dargestellt. Es zeigt:
- Fig. 1: schematische Ansichten von Häckseltrommeln mit Messern mit unterschiedlichen Formen,
- Fig. 2: eine Erntemaschine mit einer Häckseltrommel mit Schleifvorrichtung in Seitenansicht und in schematischer Darstellung,
- Fig. 3: eine Vorderansicht einer ersten Ausführungsform einer Schleifvorrichtung,
- Fig. 4: ein Flussdiagramm, das einen Schleifvorgang illustriert, und
- Fig. 5: ein Flussdiagramm, das einen anderen Schleifvorgang illustriert.

Die Figur 1 ist bereits weiter oben erläutert worden, so dass sich hier eine weitere Beschreibung erübrigt.

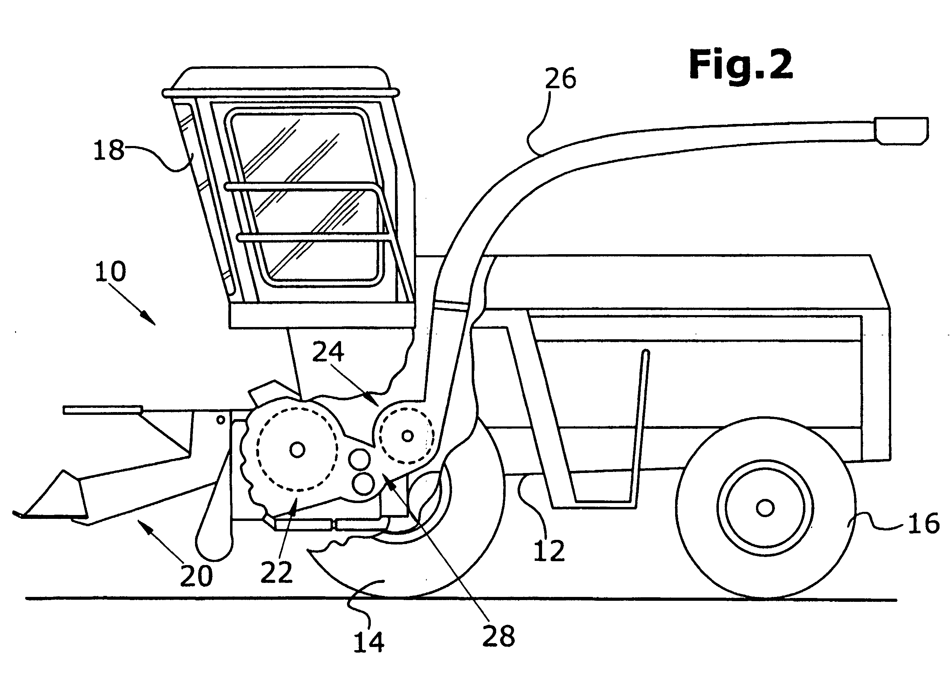

Die in Figur 2 gezeigte Erntemaschine 10 in der Art eines selbstfahrenden Feldhäckslers baut sich auf einem Rahmen 12 auf, der von vorderen und rückwärtigen Rädern 14 und 16 betragen wird. Die Bedienung der Erntemaschine 10 erfolgt von einer Fahrerkabine 18 aus, von der aus eine Erntegutaufnahmevorrichtung 20 einsehbar ist. Mittels der Erntegutaufnahmevorrichtung 20 vom Boden aufgenommenes Gut, z. B. Mais, Gras oder dergleichen wird einer Häckseltrommel 22 zugeführt, die es in kleine Stücke häckselt und es einer Fördervorrichtung 24 aufgibt. Das Gut verlässt die Erntemaschine 10 zu einem nebenher fahrenden Anhänger über einen drehbaren Austragsschacht 26. Zwischen der Häckseltrommel 22 und der Fördervorrichtung 24 erstreckt sich (bei der Ernte von Mais) eine Nachzerkleinerungsvorrichtung 28, durch die das zu fördernde Gut der Fördervorrichtung 24 tangential zugeführt wird.

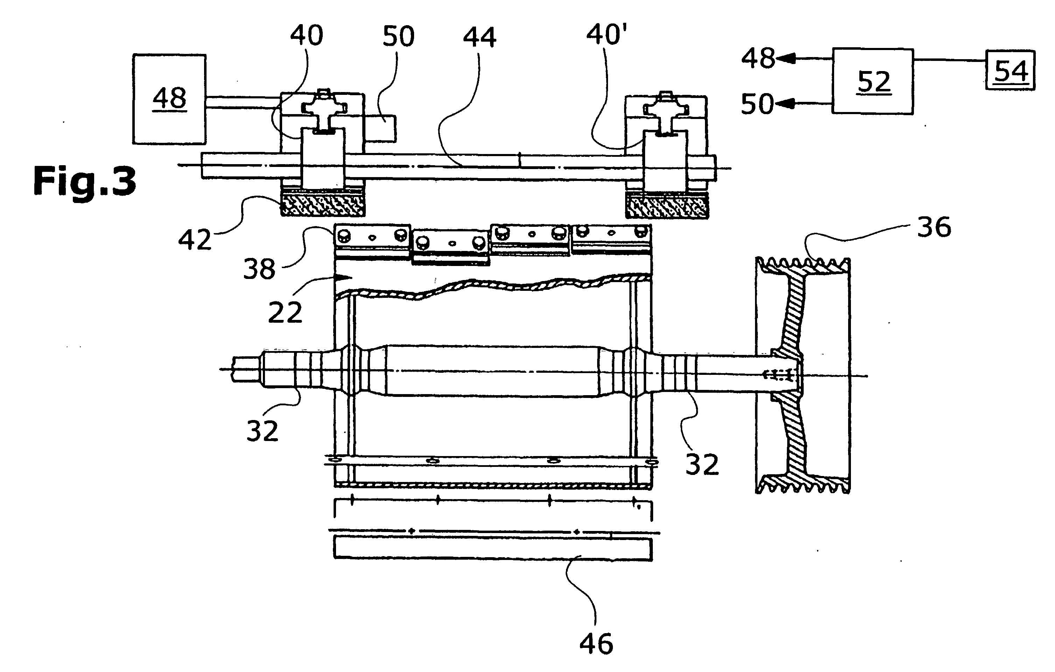

In Figur 3 ist schematisch eine Ansicht einer Häckseltrommel 22 und einer ihr zugeordneten Schleifvorrichtung wiedergegeben, wie sie sich bei einer Betrachtung der Erntemaschine 10 in Figur 1 (bezüglich der Bewegungsrichtung) von vorn ergibt. Die Häckseltrommel 22 weist eine Anzahl über ihre Breite und ihren Umfang verteilter Messer 38 auf, die in Zusammenwirken mit einer starren Gegenschneide 46 durch die Erntegutaufnahmeeinrichtung 20 aufgenommenes Erntegut zerteilen. Die Häckseltrommel 22 umfasst eine zentrale Welle 32, die über eine stirnseitige Riemenscheibe 36 und nicht dargestellte Riemen durch einen Motor der Erntemaschine 10 rotativ antreibbar ist. Die Welle 32 stützt sich durch zwei beidseits der Häckseltrommel 22 angeordnete, in Figur 3 nicht eingezeichnete Lager am Rahmen 12 der Erntemaschine 10 ab.

Um nach einer bestimmten Betriebsdauer die Messer 38 schärfen zu können, ohne die einzelnen Messer 38 oder die gesamte Häckseltrommel 22 ausbauen zu müssen, ist oberhalb der Häckseltrommel 22 nahe des von den Messern 38 beschriebenen Hüllkreises eine Schleifvorrichtung vorgesehen, die im wesentlichen einen Schleifstein 42, eine diesem zugeordnete Schleifsteinhalterung 40 und eine Achse 44 umfasst, auf der die Schleifsteinhalterung 40 verschiebbar gelagert ist.

Sollen die Messer 38 geschärft werden, wird die Häckseltrommel 22 in Rotation versetzt, in der Regel in umgekehrter Drehrichtung und/oder mit reduzierter Drehzahl, verglichen mit normalem Häckselbetrieb. Die Schleifsteinhalterung 40 mit dem daran befestigtem Schleifstein 42 wird mittels einer Bewegungseinrichtung 48 aus einer (nicht eingezeichneten) Ruhe- oder Parkposition, in der sie seitlich neben der Häckseltrommel 22 angeordnet ist, über die gesamte Breite der Häckseltrommel 22 verschoben. Dabei ist die Unterseite des Schleifsteins 42 in Kontakt mit den Messern 38, und schärft sie. Beim Schleifvorgang wird der Schleifstein 42 mehrere Male über die Breite der Häckseltrommel 22 verfahren. Die Endpunkte dieser Verschiebebewegung sind in der Figur 3 durch die Schleifsteinhalterungen mit den Bezugsziffern 40 am linken Umkehrpunkt und 40' am rechten Umkehrpunkt dargestellt.

Zwischen den Verschiebebewegungen kann ein Zustellen des Schleifsteins 42 erfolgen, also eine geringfügige Bewegung des Schleifsteins 42 auf die Messer 38 zu. In der dargestellten Ausführungsform wird dazu ein mechanisches Element (Klinkenrad) verwendet, das bei Erreichen eines oder beider Umkehrpunkte der Schleifsteinhalterung 40 mit einem ortsfesten Element zusammenwirkt. Die Drehung des mechanischen Elements wird mittels eines Gewindes in eine Verschiebebewegung umgewandelt, so dass der Schleifstein 42 der Häckseltrommel 22 zugestellt wird. Durch eine Verschiebung des Schleifsteins 42 nur über einen eingeschränkten seitlichen Verschiebebereich kann ein Zustellen vermieden werden, da das mechanische Element dann nicht mit dem ortsfesten Element in Kontakt kommt. Ein derartiges Schleifen ohne Zustellen ist beim den Schleifvorgang abschließenden Schlichten zweckmäßig. Die Bewegungseinrichtung 48 der Schleifvorrichtung wird durch eine in Figur 3 schematisch wiedergegebene Steuerung 52 gesteuert, die sowohl die Verschiebung des Schleifsteins 42 durch die Bewegungseinrichtung 48, als auch - in der oben beschriebenen Weise - das Zustellen steuert. Die Steuerung 52 wird mit einer Information über die jeweilige Position des Schleifsteins 42 beaufschlagt, was über einen entsprechenden, in der Zeichnung nicht wiedergegebenen Sensor (beispielsweise ein Linearpotentiometer, das in den Motor der Bewegungseinrichtung 48 integriert ist) erfolgen kann, oder dadurch, dass der Steuerung 52 eine Information vorliegt, in welche Stellung sie die Bewegungseinrichtung 48 verbracht hat. Dazu kann beispielsweise die Anzahl der Impulse gespeichert werden, die an einen Schrittmotor der Bewegungseinrichtung 48 abgegeben wurden. Die Steuerung 52 kann außerdem den Antrieb der Häckseltrommel 22 steuern.

Anzumerken ist, dass das Zustellen auch durch einen separaten Motor, insbesondere einen Elektro- oder Hydraulikmotor bewirkt werden könnte, der ebenfalls mit der Steuerung 52 zu verbinden wäre. Anstelle eines Zustellens durch Verschieben des Schleifsteins 42 könnte auch die ganze Schleifsteinhalterung 40 zugestellt werden.

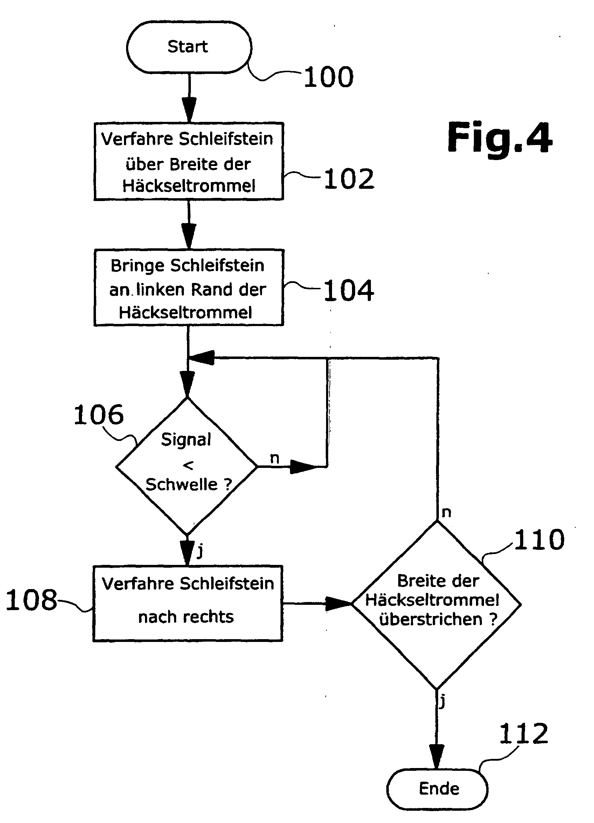

Die Steuerung 52 ist mit einem Speicher 54 und mit einem an der Schleifsteinhalterung 40 angebrachten, als Messeinrichtung dienenden Klopfsensor 50 verbunden. Ein Schleifvorgang läuft wie in Figur 4 dargestellt ab:

Zunächst veranlasst die Steuerung 52 nach dem Beginn des Schleifvorgangs (Schritt 100), dass der Schleifstein 42 in Schritt 102 durch die Bewegungseinrichtung 48 über die Breite der Häckseltrommel 22 und wieder zurück in die Ursprungsposition verfahren wird. Dabei kann der Schleifstein 42 relativ zur Schleifsteinhalterung 40 in der Position verbleiben, in die er beim vorhergehenden Schleifvorgang gebracht wurde, oder ggf. demgegenüber zur Häckseltrommel 22 zugestellt werden. Schritt 102 kann dazu dienen, festzustellen, ob ein Zustellen des Schleifsteins 42 erforderlich ist. Das ist dann der Fall, wenn an wenigstens einer Stelle der Häckseltrommel 22 kein (oder ein relativ geringes) Signal vom Klopfsensor 50 erzeugt wird. In diesem Fall ist eine Delle, Einbuchtung oder dergleichen in den Messern 38, die ohne Zustellen nicht ausgeglichen werden kann.

Beim Überstreichen der Breite der Häckseltrommel 22 erzeugt der an der Schleifsteinhalterung 40 angebrachte Klopfsensor 50 ein Signal, das von dem Abstand der Schneidkanten der Messer 38 vom Schleifstein 42 abhängt. Die Steuerung 52 wird über einen geeigneten Analog/Digitalwandler mit einer Information über die Amplitude dieses Signals beaufschlagt.

Bei einer Häckseltrommel 22, die die in Figur 1(a) gezeigte Form hat, würde ein im folgenden als Abstandssignal bezeichnetes Signal, das eine Information über den Abstand enthält, von links nach rechts absinken (dabei würde die Amplitude des vom Klopfsensor 50 abgegebenen Signals ansteigen). Bei der in Figur 1(b) gezeigten Häckseltrommel, die sich durch die Form des zugeführten Gutes oder übermäßige Verweilzeiten an den Enden der Verschiebebewegung des Schleifsteins 42 über die Breite der Häckseltrommel 22 ergeben kann, so dass die Messer 38 dort mehr abgeschliffen sind als in der Mitte, würde das Abstandssignal immer kleiner, je mehr sich der Schleifstein 42 der Mitte der Häckseltrommel 22 nähert. Ist die Form durch zu lange Verweilzeiten an den Enden der Häckseltrommel 22 bedingt, so dass sie beim Schleifen von der Steuerung 52 erkannt wird, können die im Speicher 54 abgelegten Verweilzeiten selbsttätig verkürzt werden. Die in Figur 1(c) gezeigte Form der Häckseltrommel 22 ergibt in der Mitte den größten Abstand, und die in Figur 1(d) einen unregelmäßig über die Breite variierenden Abstand. Die Form (c) kann durch zu kurze Verweilzeiten an den Enden der Häckseltrommel 22 bedingt sein. Wird sie durch die Steuerung 52 beim Schleifen erkannt, können die im Speicher 54 abgelegten Verweilzeiten selbsttätig verlängert werden. Die Formen (c) und (d) können aber auch durch ungleichmäßige Gutzufuhr oder eine defekte Gegenschneide 46 bedingt sein.

Bei dem in Figur 4 dargestellten Schleifvorgang wird der Schleifstein 42 zunächst nicht weiter zugestellt. Der Schleifstein 42 wird in Schritt 104 durch die Bewegungseinrichtung 48 in eine erste Position an der Häckseltrommel verbracht, die in der Regel der Parkposition benachbart ist und links oder rechts außen liegt. Er verbleibt in dieser Position, bis der Klopfsensor 50 ein Ausgangssignal erzeugt, das einem gewünschten Abstand zwischen Welle 32 und Schneidkanten der Messer 38 entspricht, so dass eine hinreichende Schärfung der mit dem Schleifstein zusammenwirkenden Teile der Messer 38 erzielt ist. Daher wird in Schritt 106 abgefragt, ob das Signal des Klopfsensors 50 kleiner als ein Schwellenwert ist. Ist das Ergebnis nein, folgt Schritt 106, sonst Schritt 108. Dort wird der Schleifstein 42 durch die Bewegungseinrichtung 48 um eine seiner Breite entsprechenden Strecke weiter nach links oder rechts transportiert und schleift dort die Messer 38. Es folgt Schritt 110, in dem abgefragt wird, ob die Häckseltrommel 22 bereits über die gesamte Breite bearbeitet wurde. Wenn nein, folgt Schritt 106, sonst wird der Vorgang in Schritt 112 beendet. Der Schleifstein 42 bleibt somit immer an einer Stelle der Häckseltrommel 22 stehen, bis der Klopfsensor 50 jeweils das gewünschte Ausgangssignal liefert. Diese Vorgänge wiederholen sich, bis die gesamte Breite der Häckseltrommel 22 bearbeitet ist. Auf diese Weise erreicht man, dass durch über die gesamte Breite der Häckseltrommel 22 variierende Schleifzeiten die Häckseltrommel 22 in eine zylindrische Form gebracht wird. Bei einem Überfahren der Breite der Häckseltrommel 22 mit dem Schleifstein 42 würde man nunmehr ein über die Breite der Häckseltrommel 22 konstantes Ausgangssignal des Klopfsensors 50 erhalten. Falls die Häckseltrommel 22 an einigen Stellen einen besonders kleinen Radius aufweist, so dass der Klopfsensor 50 keinen Kontakt zwischen den Messern 38 und dem Schleifstein 42 nachweist, kann ein Zustellen des Schleifsteins 42 und eine Wiederholung des Schleifvorgangs über die ganze Breite der Häckseltrommel 22 erfolgen. In der Regel wird der beschriebene Vorgang mit umkehrter Bewegungsrichtung des Schleifsteins 42 wiederholt und/oder mehrfach ausgeführt. Zum Abschluss des Schleifvorgangs kann in an sich bekannter Weise ein normales Schleifen und/oder Schlichten der gesamten Häckseltrommel 22 erfolgen. Schließlich wird der Schleifstein 42 in seine Parkposition verbracht.

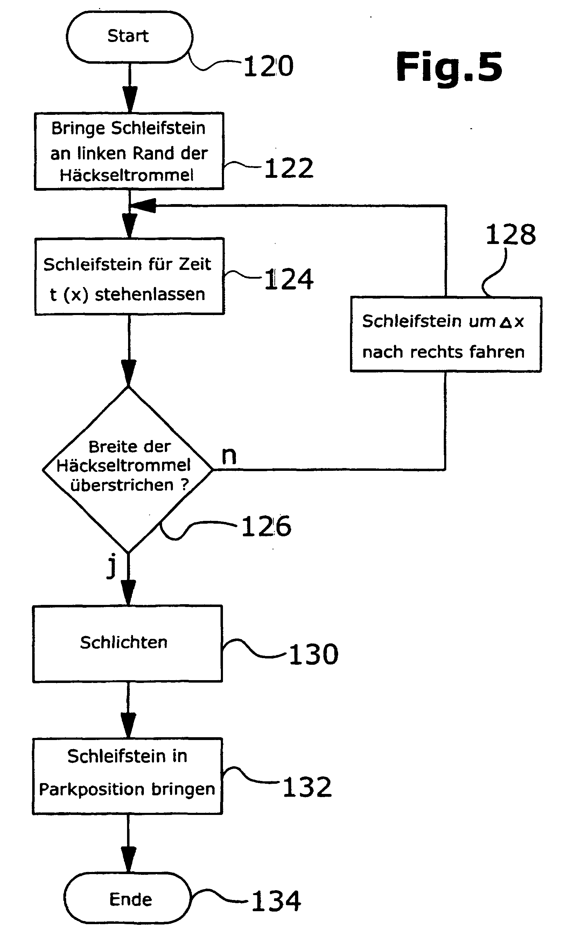

In Figur 5 ist ein Ablaufdiagramm für die Steuerung des Schleifvorgangs 42 wiedergegeben, bei der die über die Breite der Messer 38 variierenden Schleifzeiten im Voraus abgespeichert sind. Der in Figur 3 dargestellte Sensor 50 kann somit entfallen. Bei dem Schleifvorgang gemäß Figur 5 wird nach dem Start in Schritt 120 der Schleifstein 42 durch die Bewegungseinrichtung 48 aus der Parkposition an den linken Rand der Häckseltrommel 22 verbracht. Dann erfolgt Schritt 124, gemäß dem der Schleifstein 42 für eine von seiner jeweiligen Position x abhängige Zeitdauer t(x) stehen bleibt. Die Zeitdauern t(x) sind in Form einer Tabelle, Liste, mathematischen Funktion oder dergleichen im Speicher 54 abgelegt. Es folgt Schritt 126, in dem abgefragt wird, ob bereits die gesamte Breite der Häckseltrommel 22 mit dem Schleifstein 42 überstrichen wurde. Ist das nicht der Fall, folgt Schritt 128, in dem der Schleifstein um eine Strecke Δx nach rechts verfahren wird. Die Strecke Δx entspricht vorzugsweise maximal der Breite des Schleifsteins 42, damit nach einem Überstreichen der Häckseltrommel 22 alle Punkte der Messer 38 geschärft worden sind, sie kann jedoch kleiner als die Breite des Schleifsteins sein. Nach Schritt 128 folgt wiederum Schritt 124.

Falls in Schritt 126 festgestellt wird, dass bereits die Breite der Häckseltrommel 22 überstrichen wurde, folgt Schritt 130, in dem in an sich bekannter Weise ein Schlichten erfolgt. Anschließend wird der Schleifstein 42 in Schritt 132 in seine Parkposition verbracht, und es folgt das Ende des Schleifvorgangs in Schritt 134.

Anzumerken ist, dass der Schleifstein 42 vor Schritt 130 auch (mit den Schritten 124 bis 128 entsprechenden Schritten, bei denen der Schleifstein jedoch nach links bewegt wird) wieder nach links zurückgefahren werden kann. Auch kann die Häckseltrommel 22 mehrfach in der beschriebenen Weise überstrichen werden. Auch kann der Schleifstein 42, anstelle jeweils für eine bestimmte Zeitdauer stehen zu bleiben, mit einer über die Breite der Häckseltrommel 22 variierenden Geschwindigkeit angetrieben, oder mit einer variierenden Schrittweite bewegt werden.

## Patentansprüche

1. Schleifvorrichtung für eine Häckseleinrichtung, mit einem Schleifstein (42) zum Schleifen der Messer (38) der Häckseleinrichtung und einer Bewegungseinrichtung (48) zum Bewegen des Schleifsteins (42) über eine Länge der Messer (38), wobei einzelnen Stellen der Messer (38) unterschiedliche Schleifzeiten zugeordnet sind, **dadurch gekennzeichnet, dass** der gesamten Länge der Messer (38) jeweils unterschiedliche Schleifzeiten zugeordnet sind, so dass die Schleifzeit für jeden Punkt der Länge des Messers unterschiedlich ist.

2. Schleifvorrichtung nach Anspruch 1, **dadurch gekennzeichnet, dass** die den einzelnen Punkten des Messers (38) zugeordnete Schleifzeit vorbestimmt ist.

3. Schleifvorrichtung nach Anspruch 1 oder 2, **dadurch gekennzeichnet, dass** die den einzelnen Punkten des Messers (38) zugeordnete Schleifzeit in einem Speicher (54) abgelegt ist.

4. Schleifvorrichtung nach Anspruch 2 oder 3, **dadurch gekennzeichnet, dass** die den einzelnen Punkten des Messers zugeordnete Schleifzeit empirisch festgelegt ist.

5. Schleifvorrichtung nach einem der Ansprüche 1 bis 4, **dadurch gekennzeichnet, dass** der Schleifstein (42) jeweils an einer Position stehen bleibt, bis einer mit der Bewegungseinrichtung (48) verbundenen Steuerung (52) eine dieser Position zugeordnete Information vorliegt, die den Ablauf einer dieser Position zugeordneten Schleifzeit identifiziert, und dass der Schleifstein (42) danach von der Bewegungseinrichtung (48) weiter entlang der Länge des Messers (38) bewegt wird.

6. Schleifvorrichtung nach einem der Ansprüche 1 bis 4, **dadurch gekennzeichnet, dass** die Bewegungseinrichtung (48) den Schleifstein (42) kontinuierlich, jedoch mit variierender Geschwindigkeit über die Länge der Messer (38) oder über einen Teilbereich ihrer Länge verfährt.

7. Schleifvorrichtung nach einem der Ansprüche 1 bis 6, **dadurch gekennzeichnet, dass** einer mit der Bewegungseinrichtung (48) gekoppelten Steuerung (52) eine Information über die jeweilige Position des Schleifsteins (42) zugeführt wird, insbesondere über einen Sensor oder dadurch, dass eine Information über die Sollposition des Schleifsteins (42) abgespeichert ist.

8. Schleifvorrichtung nach einem der vorhergehenden Ansprüche, **dadurch gekennzeichnet, dass** die Bewegungseinrichtung (48) eingerichtet ist, den Schleifstein (42) über die Breite einer mit Messern (38) versehenen, offenen oder geschlossenen Häckseltrommel (22) zu bewegen und/oder den Schleifstein (42) zum Messer (38) zuzustellen.

9. Häckseleinrichtung mit einer Schleifvorrichtung nach einem der vorhergehenden Ansprüche.

10. Erntemaschine, insbesondere selbstfahrender oder gezogener Feldhäcksler, mit einer Häckseleinrichtung und einer Schleifvorrichtung nach einem der Ansprüche 1 bis 8.

## Claims

1. A sharpening appliance for a chopping device, with a grindstone (42) for grinding the blades (38) of the chopping device and a moving device (48) for moving the grindstone (42) over a length of the blades (38), wherein different grinding times are associated with individual points of the blades (38), **characterized in that** the different grinding times are associated over the whole length of the blades (38) so that the grinding time is different for each point of the length of the blade.

2. A sharpening appliance according to claim 1, **characterized in that** the grinding time associated with the individual points of the blade (38) is predetermined.

3. A sharpening appliance according to claim 1 or 2, **characterized in that** the grinding time associated with the individual points of the blade (38) is held in a memory (54).

4. A sharpening appliance according to claim 2 or 3, **characterized in that** the grinding time associated with the individual points of the blade is determined empirically.

5. A sharpening appliance according to any of claims 1 to 4, **characterized in that** the grindstone (42) remains at a position each time until a controller (52) coupled to the moving device (48) provides information associated with this position which identifies the elapse of a grinding time associated with this position, and **in that** the grindstone (42) is then moved by the moving device (48) further along the length of the blade (38).

6. A sharpening appliance according to any of claims 1 to 4, **characterized in that** the moving device (48) travels continuously but with varying speed over the length of the blade (38) or over a portion of its length.

7. A sharpening appliance according to any of claims 1 to 6, **characterized in that** information as to the current position of the grindstone (42) is fed to a controller (52) coupled to the moving device (48) , in particular via a sensor or **in that** information as to the set-point position of the grindstone (42) is stored.

8. A sharpening appliance according to any of the preceding claims, **characterized in that** the moving device (48) is arranged to move the grindstone (42) over the width of an open or closed chopper drum (22) provided with blades (38) and/or to feed the grindstone (42) into the blade (38).

9. A chopping device with a sharpening appliance according to any of the preceding claims.

10. A harvesting machine, especially a self-propelled or towed forage harvester, with a chopping device and a sharpening appliance according to any of claims 1 to 8.

## Revendications

1. Dispositif d'affûtage pour un dispositif de hachage, avec une pierre à aiguiser (42) pour affûter les couteaux (38) du dispositif de hachage et un dispositif de déplacement (48) pour déplacer la pierre à aiguiser (42) sur une longueur des couteaux (38), des temps d'affûtage différents étant associés à des endroits individuels des couteaux (38), **caractérisé en ce que** des temps d'affûtage différents sont chaque fois associés à la longueur totale des couteaux (38), de telle façon que le temps d'affûtage pour chaque point de la longueur du couteau soit différent.

2. Dispositif d'affûtage selon la revendication 1, **caractérisé en ce que** le temps d'affûtage associé aux points individuels du couteau (38) est prédéterminé.

3. Dispositif d'affûtage selon la revendication 1 ou 2, **caractérisé en ce que** le temps d'affûtage associé aux points individuels du couteau (38) est stocké dans une mémoire (54).

4. Dispositif d'affûtage selon la revendication 2 ou 3, **caractérisé en ce que** le temps d'affûtage associé aux points individuels du couteau (38) est déterminé de manière empirique.

5. Dispositif d'affûtage selon l'une quelconque des revendications 1 à 4, **caractérisé en ce que** la pierre à aiguiser (42) reste chaque fois dans une position jusqu'à ce qu'une information associée à cette position, qui identifie l'expiration d'un temps d'affûtage associé à cette position, soit présente à une commande (52) raccordée au dispositif de déplacement (48), et **en ce que** la pierre à aiguiser (42) est ensuite déplacée par le dispositif de déplacement (48) plus loin le long de la longueur du couteau (38).

6. Dispositif d'affûtage selon l'une quelconque des revendications 1 à 4, **caractérisé en ce que** le dispositif de déplacement (48) déplace la pierre à aiguiser (42) en continu, toutefois avec une vitesse variable sur la longueur des couteaux (38) ou sur une zone partielle de leur longueur.

7. Dispositif d'affûtage selon l'une quelconque des revendications 1 à 6, **caractérisé en ce qu'**une information sur la position respective de la pierre à aiguiser (42) est envoyée à une commande (52) couplée au dispositif de déplacement (48), en particulier par un détecteur ou **en ce qu'**une information sur la position de consigne de la pierre à aiguiser (42) est stockée en mémoire.

8. Dispositif d'affûtage selon l'une quelconque des revendications précédentes, **caractérisé en ce que** le dispositif de déplacement (48) est monté de façon à déplacer la pierre à aiguiser (42) sur la largeur d'un tambour de hachage (22) ouvert ou fermé, pourvu de couteaux (38), et/ou à approcher la pierre à aiguiser (42) du couteau (38).

9. Dispositif de hachage avec un dispositif d'affûtage selon l'un quelconque des revendications précédentes.

10. Moissonneuse, en particulier ramasseuse-hacheuse automobile ou remorquée, avec un dispositif de hachage et un dispositif d'affûtage selon l'une quelconque des revendications 1 à 8.
